# EUROPEAN PATENT APPLICATION

(11) **EP 4 835 618 A1**
(43) Date of publication of application: **04.11.2026**
(21) Application number: 24912513.9
(22) Date of filing: 17.12.2024
(51) Int. Cl.: G06F 3/01, G06F 9/00, G06F 9/06, G06T 3/4046, G06Q 10/10

(54) **BUSINESS SUPPORT SYSTEM, BUSINESS SUPPORT METHOD, AND PROGRAM**

(30) Priority: 28.12.2023 JP 2023223512
(71) Applicant: Cybozu, Inc., Tokyo 103-6027 (JP)
(72) Inventor: YAMAGUCHI, Yohei, Tokyo 103-6027 (JP)
(74) Representative: Grünecker Patent- und Rechtsanwälte PartG mbB
(86) International application number: PCT/JP2024/044554
(87) International publication number: WO 2025/142624

(57) **Abstract**

An input data acquisition module (2001) of a work support system (1) acquires input data indicating an input by a user. A selection module (2002) can select, from among a plurality of work support programs each specialized in a specific task in work support, a work support program based on an artificial intelligence (AI) that can select the work support program specialized in the task corresponding to the input data. A task processing module (2003) processes, when the work support program is selected by the selection module, the task corresponding to the input data based on the work support program.

## Description

### Technical Field

The present disclosure relates to a work support system, a work support method, and a program.

### Background Art

Hitherto, technologies for supporting work by a user based on artificial intelligence (AI) have been considered. For example, in Patent Literature 1, there is described a large language model such as bidirectional encoder representations from transformers (BERT), which is an example of such an AI. For example, large language models such as BERT are highly versatile and can process various tasks based on input data indicating an input by the user.

### Citation List

### Patent Literature

[Patent Literature 1] JP 2023-125311 A

### Summary of Invention

### Technical Problem

However, highly versatile AIs like that described in Patent Literature 1 are not specialized in specific tasks, and hence task processing accuracy may not be sufficient. Meanwhile, when a work support system attempts to prepare AIs which are specialized in certain specific tasks, the work support system is required to prepare a large number of AIs in order to handle the various types of tasks. The user is required to process a task by selecting the AI specialized in that specific task from among the large number of AIs. Thus, with the related-art technology, user convenience cannot be sufficiently increased. This point is not limited to AI, but can be said to apply to work support programs which support the work of users in general.

One object of the present disclosure is to increase user convenience.

### Solution to Problem

According to one aspect of the present disclosure, there is provided a work support system including: an input data acquisition module configured to acquire input data indicating an input by a user; a selection module configured to select, from among a plurality of work support programs each specialized in a specific task in work support, a work support program based on an artificial intelligence (AI) configured to select the work support program specialized in the specific task corresponding to the input data; and a task processing module configured to process, when the work support program is selected by the selection module, the specific task corresponding to the input data based on the work support program.

### Advantageous Effects of Invention

According to the present disclosure, the user convenience can be increased.

### Brief Description of Drawings

FIG. 1 is a diagram for illustrating an example of a hardware configuration of a work support system.
FIG. 2 is a view for illustrating an example of a work support screen.
FIG. 3 is a diagram for illustrating an example of a relationship between a parent AI and child AIs.
FIG. 4 is a diagram for illustrating an example of functions implemented in the work support system.
FIG. 5 is a table for showing an example of a training database.
FIG. 6 is a flowchart for illustrating an example of processing executed in the work support system.
FIG. 7 is a diagram for illustrating an example of functions implemented in a work support system according to Modification Example 1.
FIG. 8 is a diagram for illustrating an example of AIs in Modification Example 6.

### Description of Embodiments

### [1. Hardware Configuration]

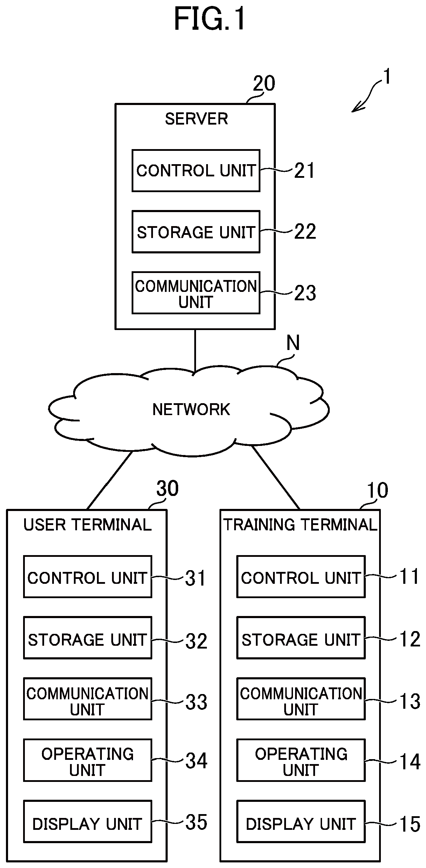

An example of a work support system, a work support method, and a program according to an embodiment of the present disclosure is described. FIG. 1 is a diagram for illustrating an example of a hardware configuration of the work support system. For example, a work support system 1 includes a training terminal 10, a server 20, and a user terminal 30. The training terminal 10, the server 20, and the user terminal 30 are each connected to a network N such as the Internet or a LAN.

The training terminal 10 is a computer which trains an artificial intelligence (AI) described later. For example, the training terminal 10 is a personal computer, a tablet terminal, or a smartphone. For example, the training terminal 10 includes a control unit 11, a storage unit 12, a communication unit 13, an operating unit 14, and a display unit 15. The control unit 11 includes at least one processor. The storage unit 12 includes at least one of a volatile memory such as a RAM, or a nonvolatile memory such as a flash memory. The communication unit 13 includes at least one of a communication interface for wired communication or a communication interface for wireless communication. The operating unit 14 is an input device such as a mouse or a touch panel. The display unit 15 is a liquid crystal display or an organic EL display.

The server 20 is a server computer. For example, the server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively.

The user terminal 30 is a computer of a user. For example, the user terminal 30 is a personal computer, a tablet terminal, a smartphone, or a wearable terminal. For example, the user terminal 30 includes a control unit 31, a storage unit 32, a communication unit 33, an operating unit 34, and a display unit 35. Hardware configurations of the control unit 31, the storage unit 32, the communication unit 33, the operating unit 34, and the display unit 35 may be the same as those of the control unit 11, the storage unit 12, the communication unit 13, the operating unit 14, and the display unit 15, respectively.

Programs stored in the storage units 12, 22, and 32 may be supplied through the network N. A hardware configuration of each of the training terminal 10, the server 20, and the user terminal 30 is not limited to the example of FIG. 1. For example, at least one of the training terminal 10, the server 20, or the user terminal 30 may include at least one of a reading unit (for example, a memory card slot) that reads a computer-readable information storage medium or an input/output unit (for example, a USB terminal) for allowing direct connection to an external device. A program stored in the information storage medium may be supplied to at least one of the training terminal 10, the server 20, or the user terminal 30 through at least one of the reading unit or the input/output unit.

Moreover, the work support system 1 is only required to include at least one computer. The computers included in the work support system 1 are not limited to the example of FIG. 1. For example, the work support system 1 may include only the training terminal 10 and the server 20. In this case, the user terminal 30 is present outside the work support system 1. The work support system 1 may include only the server 20. In this case, the training terminal 10 and the user terminal 30 are present outside the work support system 1. The work support system 1 may include the server 20 and another server computer.

### [2. Overview of Work Support System]

In this embodiment, the work support system 1 has work support functions that support work of users. For example, the work support functions may be a communication function for the users to communicate with other users, a schedule management function for managing the schedules of the users, a file management function for managing the files of the users, or an email management function for managing the emails of the users. The work support functions may also be other publicly-known functions.

For example, the work support system 1 may provide users with groupware of a cloud type or an on-premises type. The work support system 1 may also provide users with services that support work but are not classified as groupware. When a user logs in to the work support system 1, the user terminal 30 displays, on the display unit 35, a work support screen for the user to use a work support function. In this embodiment, a case in which the work support screen is displayed on a browser of the user terminal 30 is taken as an example.

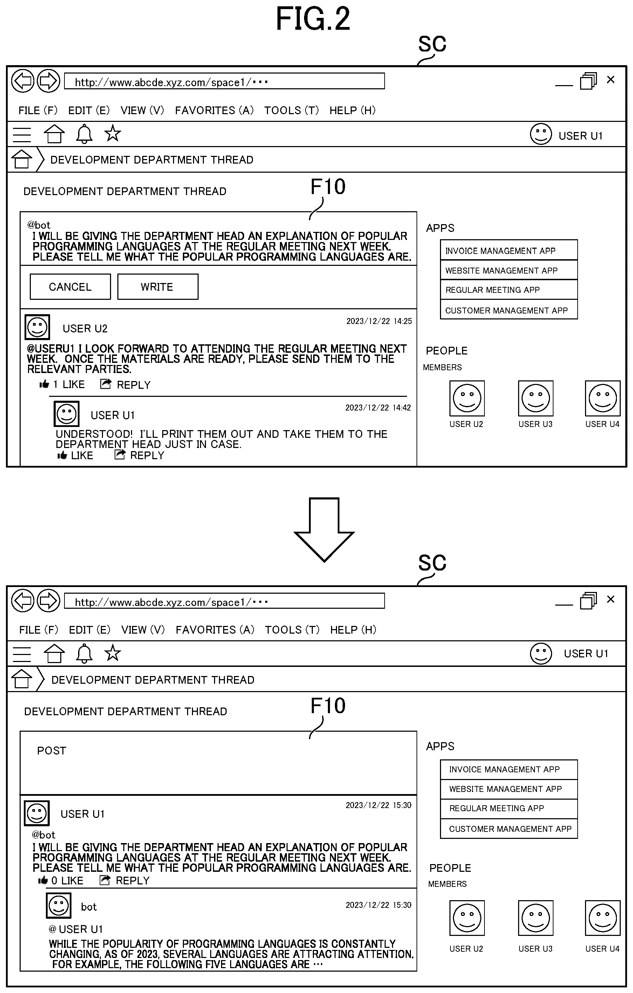

FIG. 2 is a diagram for illustrating an example of the work support screen. In the example of FIG. 2, a work support screen SC for the user to use the communication function, which is an example of a work support function, is illustrated. For example, the user terminal 30 displays a thread selected by the user from among a plurality of threads created in the work support system 1 on the work support screen SC. On the work support screen SC, posts made to the thread are arranged in chronological order. The user can make new posts to the thread or post replies to existing posts.

As illustrated in the work support screen SC in the upper part of FIG. 2, the user can input a new post into an input form F10. For example, the user can make a mention by designating another user. A mention is a notification to another user. In the example of FIG. 2, the user can mention another user by inputting a specific symbol (for example, "@") followed by information on the other user (for example, the name of the other user). The mention mechanism may be similar to a publicly-known mechanism. The user can also mention an AI in the same way the user mentions another user.

The AI is a program having artificial intelligence that supports work of users. There are various views in terms of definitions of the AI, but the AI in this embodiment may be an AI defined by any one of various publicly-known definitions. The AI may be an AI called a generative AI or a conversational AI. Examples of the AI may include a large language model, a machine learning model not classified as a large language model, a program called a bot, and other programs. There are also various views in terms of definitions of machine learning, but the machine learning in this embodiment may be machine learning defined by any one of various publicly-known definitions. The machine learning may be any one of supervised learning, semi-supervised learning, or unsupervised learning.

In this embodiment, a case in which a large language model corresponds to the AI is taken as an example. For example, the user can mention the AI by inputting, instead of information on another user, a character string indicating the AI (for example, "bot") after the specific symbol (for example, "@"). When the user inputs the post, the user terminal 30 transmits input data indicating the post input by the user to the server 20.

For example, when the server 20 receives the input data from the user terminal 30, the server 20 determines whether or not the AI has been mentioned, based on the input data. When the server 20 does not determine that the AI has been mentioned, the server 20 reflects the post by the user in the thread. When the server 20 determines that the AI has been mentioned, the server 20 causes the AI to process a task corresponding to the input data.

A task is the content of processing that a program, for example, the AI, is to execute. A task can also be said to be the content of an output from the program, for example, the AI. The task may be any task relating to work support. For example, tasks may include machine translation, summary creation, research (providing knowledge), scheduling, generating documents such as emails or reports, creating images, generating applications, setting of databases, classifying input data, or other tasks. The work support system 1 can process a plurality of tasks, including those examples. Task processing is also an example of the work support functions that the work support system 1 has.

The task corresponding to the input data is a task determined based on the input indicated by the input data (in the example of FIG. 2, a post to a thread). The task corresponding to the input data can also be said to be the task requested by the user who has made the input indicated by the input data. For example, when the AI is a generative AI, the task corresponding to the input data is a task in which the AI generates content, such as an image or a sentence, based on the input data. When the AI is an interactive AI, the task corresponding to the input data is a task in which answer data indicating an answer from the AI is generated based on the input indicated by the input data.

In this embodiment, a plurality of AIs specialized in specific tasks in work support are prepared. Each AI is an example of a work support program that supports the work of the user. Like in modification examples described later, a work support program may be a program that is not classified as an AI, but in this embodiment, a case in which the AI corresponds to a work support program is taken as an example. The server 20 causes, from among the plurality of AIs prepared in advance, the AI specialized in the task corresponding to the input data to process the task.

In the example of FIG. 2, the input data indicates a post such as "I will be giving the department head an explanation of popular programming languages at the regular meeting next week. Please tell me what the popular programming languages are." The user is requesting the AI to research popular programming languages, and hence the task corresponding to this input data is a research task. The server 20 causes, from among the plurality of AIs prepared in advance, the AI specialized in research tasks to process the research task. The server 20 transmits data indicating a processing result of the task output by the AI to the user terminal 30. As illustrated in the work support screen SC in the lower part of FIG. 2, the user terminal 30 displays the answer from the AI based on this data.

As described above, the server 20 causes, from among the plurality of AIs, the AI specialized in the task corresponding to the input data to process the task. For example, there may be a case in which the user himself or herself selects the AI specialized in the task corresponding to the input data from among the plurality of AIs, and the server 20 causes the AI selected by the user to process the task. In this case, the user is required to select the AI, which is time-consuming for the user. In addition, the user may not always select an appropriate AI, and hence there is a possibility that the task may not be processed appropriately.

In view of the above, in this embodiment, separate from the AI specialized in a specific task, an AI which can select that AI is prepared in advance. An AI that performs processing specialized in a specific task is hereinafter referred to as "child AI." The child AI can also be called a specialized AI. An AI that can select a child AI is referred to as "parent AI." The parent AI can also be called a selection AI. In this embodiment, a case in which the parent AI performs only the task of selecting a child AI is taken as an example. However, as in the modification examples described later, the parent AI may be a general-purpose AI that can process various tasks. That is, the parent AI may be an AI that can handle various tasks, and is not specialized only in the task of selecting a child AI.

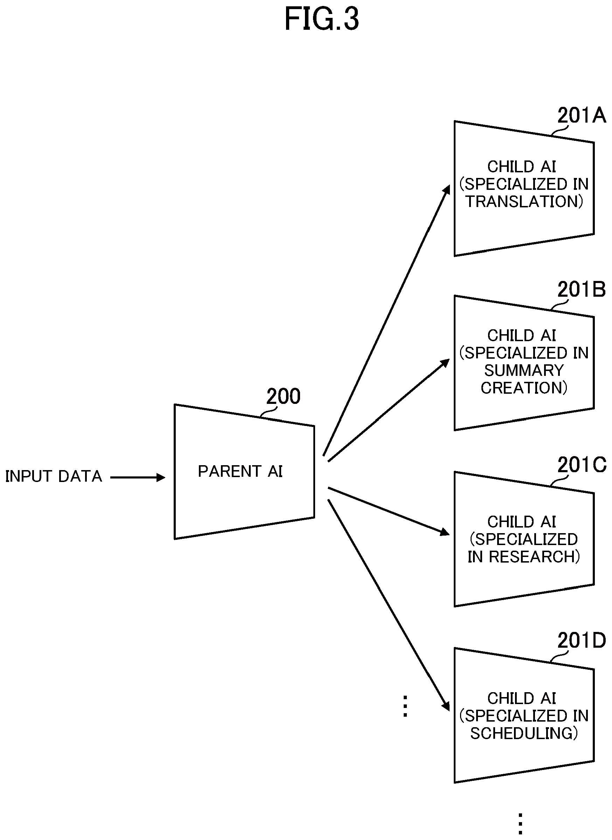

FIG. 3 is a diagram for illustrating an example of a relationship between a parent AI and child AIs. In the example of FIG. 3, a child AI 201A specialized in machine translation tasks, a child AI 201B specialized in summary creation tasks, a child AI 201C specialized in research tasks, and a child AI 201D specialized in scheduling tasks are prepared. When the child AIs 201A to 201D are not specifically distinguished from each other, those child AIs are hereinafter simply referred to as "child AI 201." Further, when the parent AI 200 and the child AI 201 are not specifically distinguished from each other, the reference numerals are omitted and the parent AI 200 and the child AI 201 are hereinafter simply referred to as "AI."

For example, the server 20 inputs the input data received from the user terminal 30 to the parent AI 200. It is assumed that the parent AI 200 has been trained in advance so that the parent AI 200 can select an appropriate child AI 201. The training method for the parent AI 200 is described later. Depending on the content of the input data, the parent AI 200 may not be required to select a child AI 201. In the example of the input data of FIG. 2, the parent AI 200 estimates, from the content of the input data, that the child AI 201C specialized in research tasks is appropriate, and selects the child AI 201C.

For example, the server 20 inputs the input data received from the user terminal 30 to the child AI 201C selected by the parent AI 200. The child AI 201C processes the research task based on the input data, and outputs output data indicating the result of the research. In the example of FIG. 2, the output data output from the child AI 201C indicates an answer such as "While the popularity of programming languages is constantly changing, as of 2023, several languages are attracting attention. For example, the following five languages are ...."

In this embodiment, the child AI 201 selected by the parent AI 200 changes depending on the content of the input data. For example, there may be a case in which the user inputs a post containing a sentence written in Japanese and a sentence such as "Please translate the above sentence into English." In this case, the parent AI 200 estimates from the content of the input data that the child AI 201A, which is specialized in machine translation tasks, is appropriate, and selects the child AI 201A. The server 20 causes the child AI 201A selected by the parent AI 200 to process the machine translation task based on the input data. The child AI 201A processes the machine translation task by translating the Japanese sentence indicated by the input data into English.

For example, there may be a case in which the user inputs a post containing sentences of a certain length and a sentence such as "Please create a summary of the above sentences." In this case, the parent AI 200 estimates from the content of the input data that the child AI 201B, which is specialized in summary creation tasks, is appropriate, and selects the child AI 201B. The server 20 causes the child AI 201B selected by the parent AI 200 to process the summary creation task based on the input data. The child AI 201B processes the summary creation task by creating a summary of the sentences indicated by the input data.

For example, there may be a case in which the user inputs a post containing a suggested meeting date and a sentence such as "Please check if my schedule is free." In this case, the parent AI 200 estimates from the content of the input data that the child AI 201D, which is specialized in scheduling tasks, is appropriate, and selects the child AI 201D. The server 20 causes the child AI 201D selected by the parent AI 200 to process the scheduling task based on the input data. The child AI 201D processes the scheduling task by referring to the schedule data of the user registered in the work support system 1, and checking whether or not the suggested date indicated by the input data is free.

As described above, with the work support system 1 according to this embodiment, the parent AI 200 can select the child AI 201 specialized in the task corresponding to the input data based on the input data indicating the post input by the user. When a child AI 201 is selected by the parent AI 200, the child AI 201 processes the task corresponding to the input data. As a result, the work efficiency of the user is increased, and hence the work support system 1 can increase the user convenience. Details of the work support system 1 are described below.

### [3. Functions Implemented in Work Support System]

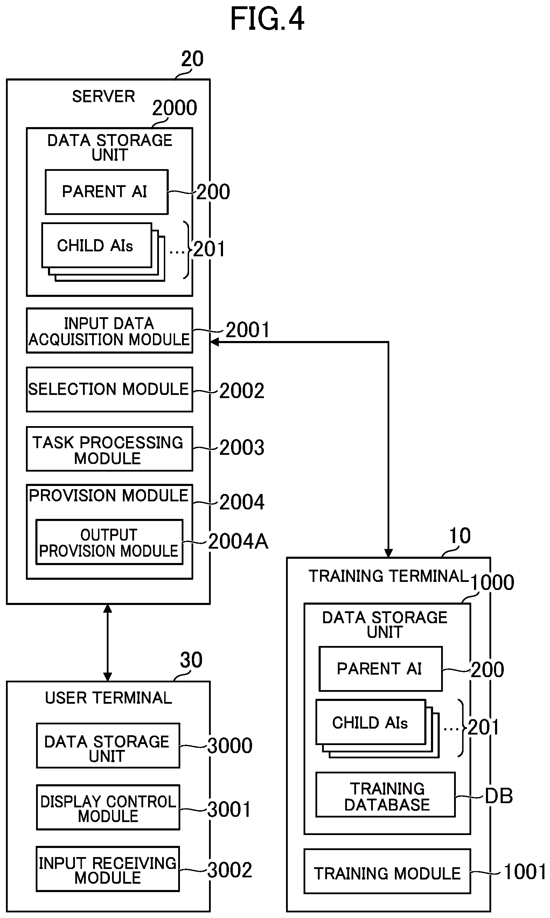

FIG. 4 is a diagram for illustrating an example of functions implemented in the work support system 1.

### [3-1. Functions Implemented in Training Terminal]

For example, the training terminal 10 includes a data storage unit 1000 and a training module 1001. The data storage unit 1000 is implemented by the storage unit 12. The training module 1001 is implemented by the control unit 11.

### [Data Storage Unit]

The data storage unit 1000 stores data required for training at least one of the parent AI 200 or the child AI 201. For example, the data storage unit 1000 stores the parent AI 200. In this embodiment, a case in which the parent AI 200 is a transformer-based large language model such as a generative pre-trained transformer (GPT) or bidirectional encoder representations from transformers (BERT) is taken as an example. The parent AI 200 may be a large language model that uses a method other than a transformer. The parent AI 200 may be a machine learning model that is not classified as a large language model. For example, the parent AI 200 may be a generative adversarial network, a neural network, or a support vector machine.

The selection of an appropriate child AI 201 can also be considered as the classification (labeling) of the input data, and hence the parent AI 200 may be a machine learning model that can classify input data. In addition, the parent AI 200 may be a program that is not classified as a machine learning model. For example, the parent AI 200 may be a rule-based program that shows a relationship between the input data and an appropriate child AI 201. A rule-based program defines rules that are determined based on all or some of the inputs represented by the input data. A rule-based program contains program code showing that a child AI 201 associated with a certain rule is appropriate when that rule is met. When the parent AI 200 is a rule-based program, training is not performed, and hence the work support system 1 is not required to include the training terminal 10.

In this embodiment, the parent AI 200 is a machine learning model, such as a transformer-based large language model, and hence the parent AI 200 includes parameters that are adjusted by training and a program that indicates processing such as the calculation of embedded representations. Further, in this embodiment, a case in which a business operator that provides the work support system 1 to the user (for example, a company that developed the groupware) creates the parent AI 200 by executing retraining (for example, fine-tuning, transfer learning, or distillation) of a pre-trained large language model provided by another business operator is taken as an example.

The program and the parameters of the parent AI 200 may be various publicly-known programs and parameters. The parameters of the parent AI 200 are referenced by the program of the parent AI 200. For example, the parameters are at least one of a weight coefficient or a bias. The program of the parent AI 200 includes code showing the internal processing of the parent AI 200. For example, the program of the parent AI 200 includes an intermediate layer that calculates an embedded representation to generate data for the output layer, and an output layer that produces the final output based on the generated data.

For example, when the parent AI 200 is a transformer-based large language model, the program of the parent AI 200 shows processing of dividing the sentence represented by the input data into a plurality of tokens, processing of calculating an embedded representation of each token, processing of making a prediction corresponding to the sequence of the embedded representations, and processing of producing an output corresponding to this series of processes. When the parent AI 200 is another machine learning model, the program of the parent AI 200 may show the processing that is used by the other machine learning model. The data storage unit 1000 stores a training database DB in which the training data used by the training module 1001 (described later) to train the parent AI 200 is stored.

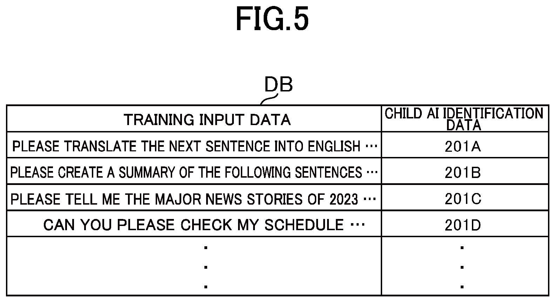

FIG. 5 is a table for showing an example of the training database DB. In this embodiment, a case in which supervised learning is performed is taken as an example. For example, the training data includes an input portion that is input to the AI during training and an output portion that serves as a ground truth during training. In the example of FIG. 5, the input portion of the training data is the training input data. The output portion of the training data is child AI identification data for identifying the child AI 201 which serves as the ground truth (child AI 201 specialized in the task corresponding to the training input data). When the parent AI 200 is created by retraining a pre-trained large language model, the training data is the data for retraining. Retraining is also included in the training as referred to in this embodiment.

The training input data indicates the input for training. For example, the training input data indicates a sentence (character string) for training. Like in the example of FIG. 2, when input data indicating a thread post is analyzed by the parent AI 200, the training input data is the post that the training module 1001 is to train the parent AI 200 on. The training input data may also indicate information other than a sentence. For example, the training input data may indicate a file, a reaction, an image displayed on the work support screen SC, or other information.

The child AI identification data is data that can be used by the work support system 1 to identify the child AI 201. For example, the child AI identification data is an ID or a name assigned to the child AI 201. The child AI identification data indicates the child AI 201 specialized in the task corresponding to the training input data. In other words, the child AI identification data indicates the child AI 201 that serves as the ground truth during training. In this embodiment, a case in which one piece of child AI identification data is associated with one piece of training input data (that is, there is one piece of child AI identification data that serves as the ground truth for one piece of training input data) is taken as an example, but a plurality of pieces of child AI identification data may be associated with one piece of training input data.

For example, when the training input data indicates content relating to machine translation, the piece of child AI identification data that is paired with that piece of training input data indicates the child AI 201A specialized in machine translation tasks. When the training input data indicates content relating to summary creation, the piece of child AI identification data that is paired with that piece of training input data indicates the child AI 201B specialized in summary creation tasks. When the training input data indicates content relating to research, the piece of child AI identification data that is paired with that piece of training input data indicates the child AI 201C specialized in research tasks. When the training input data indicates content relating to scheduling, the piece of child AI identification data that is paired with that piece of training input data indicates the child AI 201D specialized in scheduling tasks.

The training data may be created by a person in charge of training the parent AI 200. For example, the person in charge creates the training input data, which is the input portion of the training data, based on posts in existing threads or virtual posts. The person in charge determines an appropriate task for those posts, and designates (annotates) the child AI identification data of the child AI 201 that is specialized in that task as the output portion of the training data. The training terminal 10 generates pairs of those input portions and output portions as training data, and stores the generated pairs in the training database DB. The training data may be generated by using a publicly-known tool instead of based on a manual designation by the person in charge.

For example, the data storage unit 1000 stores a plurality of child AIs 201. In this embodiment, a case in which the child AI 201 is, as with the parent AI 200, a transformer-based large language model is taken as an example. The child AI 201 may be a large language model that uses a method other than a transformer. The child AI 201 may be a machine learning model that is not classified as a large language model. For example, the child AI 201 may be a generative adversarial network, a neural network, or a support vector machine. Further, the child AI 201 may be a program that is not classified as a machine learning model.

In this embodiment, a case in which the business operator providing the work support system 1 to the user creates the child AI 201 by retraining a pre-trained large language model provided by another business operator is taken as an example. For example, the child AI 201 includes parameters that are adjusted by training, and a program that shows processing such as calculating embedded representations. The program and the parameters of the child AI 201 may be various publicly-known programs and parameters. This point is as described in relation to the program and the parameters of the parent AI 200. The program and the parameters of the child AI 201 may be the same as those described as examples of the program and the parameters of the parent AI 200.

For example, the data storage unit 1000 stores training data for retraining the pre-trained large language model. That is, the data storage unit 1000 stores training data for the child AI 201 in addition to the training data for the parent AI 200. The training data for the child AI 201 may be publicly-known training data, and hence illustration thereof is omitted. The training data for the child AI 201 is prepared in accordance with the task that the child AI 201 is specialized in. For example, the training data for the child AI 201 includes training input data and output data indicating the output that serves as the ground truth corresponding to the task of the child AI 201. The output data is determined in accordance with the content of the task.

For example, the training data for the child AI 201A, which is specialized in machine translation tasks, includes training input data indicating sentences before translation and output data indicating sentences after translation. The training data for the child AI 201B, which is specialized in summary creation tasks, includes training input data indicating sentences to be summarized and output data showing summaries that serves as the ground truth. The training data for the child AI 201C, which is specialized in research tasks, includes training input data indicating research requests and output data indicating the content of the research that serves as the ground truth. The training data for the child AI 201D, which is specialized in scheduling tasks, includes training input data indicating schedules to be adjusted and output data indicating the adjustment result that serves as the ground truth. Similarly, for other tasks, training data corresponding to the task may be prepared.

The data stored by the data storage unit 1000 is not limited to the example of this embodiment. The data storage unit 1000 is only required to store the data that is required for training at least one of the parent AI 200 or the child AI 201. For example, the data storage unit 1000 may store other data such as a training program showing a series of processes to be performed during training. The training program is assumed to also show an expression for calculating a loss function that is used for calculation during training. The data storage unit 1000 may store all of the parent AI 200 before training (parent AI 200 having initial parameters), the parent AI 200 after training (parent AI 200 having parameters adjusted by training), the child AI 201 before training (child AI 201 having parameters adjusted by pre-training), and the child AI 201 after training (child AI 201 having parameters adjusted by retraining).

### [Training Module]

The training module 1001 trains at least one of the parent AI 200 or the child AI 201. For example, the training module 1001 trains the parent AI 200 based on each of the plurality of pieces of training data stored in the training database DB. In this embodiment, a case in which the training module 1001 trains the parent AI 200 based on a supervised learning algorithm is taken as an example. The training algorithm may be a publicly-known algorithm. The training module 1001 may train the parent AI 200 based on a semi-supervised learning algorithm or an unsupervised learning algorithm.

In this embodiment, the training module 1001 executes a series of training processes by executing a training program stored in the data storage unit 1000. For example, the training module 1001 may train the parent AI 200 by adjusting the parameters of the parent AI 200 so that when the input portion of the training data stored in the training database DB is input to the parent AI 200, the output portion of the training data is output from the parent AI 200. The training module 1001 calculates a loss of the parent AI 200 based on a loss function described in the training program. The training module 1001 repeats the training until the loss becomes sufficiently small.

In this embodiment, a case in which a transformer-based large language model corresponds to the parent AI 200 is taken as an example, and hence the training module 1001 may train the parent AI 200 based on a publicly-known algorithm used in the transformer-based large language model. The training module 1001 may train the parent AI 200 based on a publicly-known algorithm corresponding to the type of machine learning model used as the parent AI 200. For example, the training module 1001 may train the parent AI 200 based on a publicly-known algorithm such as backpropagation or gradient descent. The training module 1001 may train the parent AI 200 from scratch, instead of retraining a pre-trained large language model. The training module 1001 may train the parent AI 200 based on unannotated training data.

For example, when training is complete, the training module 1001 records the trained parent AI 200 in the data storage unit 1000. The data storage unit 1000 may store both the parent AI 200 before training and the trained parent AI 200. The training module 1001 transmits the trained parent AI 200 to the server 20. The trained parent AI 200 transmitted to the server 20 is made available for use by the user.

For example, the training module 1001 trains the child AI 201 based on the training data for the child AI 201. A specific example of the training method for the child AI 201 may be the same as the method described as an example of the training method for the parent AI 200. The training module 1001 trains the child AI 201 by adjusting the parameters of the child AI 201 so that when the input portion of the training data for the child AI 201 is input to the child AI 201, the output portion of the training data is output from the child AI 201. In this embodiment, the training module 1001 retrains a pre-trained child AI 201. The retraining may be executed by a publicly-known algorithm. The training module 1001 may train the child AI 201 from scratch, instead of retraining a pre-trained large language model. The training module 1001 may train the child AI 201 based on unannotated training data.

For example, when training is complete, the training module 1001 records the trained child AI 201 in the data storage unit 1000. The data storage unit 1000 may store both the child AI 201 before training and the trained child AI 201. The training module 1001 transmits the trained child AI 201 to the server 20. The trained child AI 201 transmitted to the server 20 is made available for use by the user.

### [3-2. Functions Implemented in Server]

For example, the server 20 includes a data storage unit 2000, an input data acquisition module 2001, a selection module 2002, a task processing module 2003, and a provision module 2004. The data storage unit 2000 is implemented by the storage unit 22. Each of the input data acquisition module 2001, the selection module 2002, the task processing module 2003, and the provision module 2004 is implemented by the control unit 21.

### [Data Storage Unit]

The data storage unit 2000 stores data required for work support. For example, the data storage unit 2000 stores the parent AI 200 and the plurality of child AIs 201. In this embodiment, the training terminal 10 trains each of the parent AI 200 and the plurality of child AIs 201. The server 20 acquires the trained parent AI 200 and the plurality of trained child AIs 201 from the training terminal 10, and records the trained parent AI 200 and the plurality of trained child AIs 201 in the data storage unit 2000.

As described above, each child AI 201 is an example of a work support program, and hence the term "child AI 201" can be read as meaning a work support program. In this embodiment, a case in which each child AI 201 corresponds to a certain one specific task is taken as an example, but the child AIs 201 may correspond to a plurality of tasks. That is, each child AI 201 may be a single-task AI or a multi-task AI.

Further, at least one of the parent AI 200 or the child AI 201 may be stored on another computer other than the server 20 (for example, another server computer). For example, when the parent AI 200 is stored on another computer, the selection module 2002 described later requests, by transmitting input data to the other computer, the other computer to select the child AI 201. The other computer can select the child AI 201 based on the input data received from the server 20 and the parent AI 200 stored on the other computer itself. The other computer transmits selection result data indicating the result of selection by the child AI 201 to the server 20. The selection module 2002 may identify the child AI 201 selected by the parent AI 200 based on the selection result data received from the other computer.

For example, when the child AI 201 is stored on another computer, the task processing module 2003 described later requests, by transmitting input data to the other computer, the other computer to process the task. When the parent AI 200 is not stored on the other computer, the task processing module 2003 may transmit selection result data indicating the child AI 201 selected by the parent AI 200 to the other computer. The other computer causes the child AI 201 specialized in the task corresponding to the input data to process the task based on those pieces of data. The other computer transmits processing result data indicating a processing result of the task to the server 20. The task processing module 2003 acquires the processing result data received from the other computer. In this way, the task processing module 2003 may process the task by requesting the other computer to perform the actual task processing and acquiring the processing result data.

The data stored in the data storage unit 2000 is not limited to the example described above. The data storage unit 2000 may store any data. For example, the data storage unit 2000 may store a program and data for each function of the work support system 1 (for example, in the case of a communication function, data for posting to a thread). The data storage unit 2000 may store a database containing various types of data of the users who use the work support system 1. The data storage unit 2000 may store data such as data for displaying the work support screen SC (for example, HTML data).

### [Input Data Acquisition Module]

The input data acquisition module 2001 acquires input data indicating an input by the user. "Input by the user" can also be called "operation by the user." For example, the input data indicates a character string input by the user. "Character string" may also be called text, a message, or a sentence. In the example of FIG. 2, the input data indicates a post by the user. The input data may indicate another input other than a character string. For example, the input data may indicate voice spoken by the user, a result of a file selection by the user, a result of selecting information (for example, an image or text) displayed on the work support screen SC, or another input.

For example, when the user performs some sort of input on the work support screen SC, the user terminal 30 transmits input data indicating the input to the server 20. The input data acquisition module 2001 acquires the input data from the user terminal 30. The input data acquisition module 2001 may acquire the input data from the user terminal 30 through another computer other than the server 20 and the user terminal 30. In the example of FIG. 2, when the user performs an operation for making a post (for example, selecting the "Write" button), the user terminal 30 transmits, to the server 20, input data indicating the post input into the input form F10. The input data acquisition module 2001 acquires the input data indicating the post by the user from the user terminal 30.

The input data may be stored in the data storage unit 2000. For example, the input data acquisition module 2001 records the input data acquired from the user terminal 30 in the data storage unit 2000. The input data acquisition module 2001 can acquire the input data from the data storage unit 2000 at any time. In this case, the data storage unit 2000 may also store data for identifying the user who performed the input indicated by the input data.

### [Selection Module]

The selection module 2002 can select, from among a plurality of work support programs each specialized in a specific task in work support, a work support program based on a parent AI 200 that can select the work support program specialized in the task corresponding to the input data. In this embodiment, a case in which a child AI 201 corresponds to the work support program is taken as an example, and hence the selection module 2002 can select, based on the parent AI 200, the child AI 201 specialized in the task corresponding to the input data. The selection module 2002 may select a plurality of child AIs 201.

The selection module 2002 is not always required to select a child AI 201, and there may be cases in which the selection module 2002 does not select a child AI 201. For example, when a task corresponding to the input data does not exist, or when a task corresponding to the input data does exist but a child AI 201 specialized in that task does not exist, the selection module 2002 is not required to select a child AI 201. The selection module 2002 may attempt to select a child AI 201 each time input data is acquired. When a certain piece of input data is acquired, the selection module 2002 may not select the child AI 201 specialized in the task corresponding to the piece of input data, and when another piece of input data is acquired, the selection module 2002 may select a child AI 201 specialized in the task corresponding to the other piece of input data.

For example, the selection module 2002 inputs input data to the parent AI 200. The input data is used as a prompt for the parent AI 200. In addition to the input data, a default prompt prepared by the work support system 1 may also be input to the parent AI 200. The parent AI 200 calculates an embedded representation based on the input data, and outputs output data indicating the output corresponding to the embedded representation. When a child AI 201 corresponding to the embedded representation exists, the parent AI 200 outputs the child AI identification data of that child AI 201 as output data. When a child AI 201 corresponding to the embedded representation does not exist, the parent AI 200 outputs output data indicating that a child AI 201 is not selected. The selection module 2002 acquires the output data output from the parent AI 200. The series of processes of the parent AI 200 is executed based on parameters adjusted through training.

In this embodiment, a case in which a transformer-based large language model corresponds to the parent AI 200 is taken as an example, and hence the parent AI 200 divides the character string represented by the input data into a plurality of tokens, and calculates an embedded representation of each token. The parent AI 200 predicts, based on the sequence of embedded representations of the tokens, a continuation of the character string represented by the input data as required, and outputs output data. When a child AI 201 corresponding to the sequence of embedded representations of the tokens exists, the parent AI 200 outputs the child AI identification data of that child AI 201 as output data. When a child AI 201 corresponding to the sequence of embedded representations of the tokens does not exist, the parent AI 200 outputs output data indicating that a child AI 201 is not selected.

The processing executed by the parent AI 200 is not limited to the example described above. The parent AI 200 may output any output data indicating a result of selection by a child AI 201 based on the input data. The relationship between those inputs and outputs may be defined in the program code of the parent AI 200. For example, when the parent AI 200 is a machine learning model other than a transformer, the parent AI 200 may calculate an embedded representation based on the input data and output output data corresponding to the embedded representation, in the same manner as described above. When the parent AI 200 is a program that is not classified as a machine learning model, the output data may be output from the parent AI 200 based on, for example, the program code and variables written in the program.

### [Task Processing Module]

The task processing module 2003 processes, when a work support program has been selected by the selection module 2002, the task corresponding to the input data based on the selected work support program. In this embodiment, a case in which a child AI 201 corresponds to the work support program is taken as an example, and hence the task processing module 2003 processes the task based on the input data and the child AI 201 selected by the selection module 2002. That is, the task processing module 2003 causes the child AI 201 selected by the selection module 2002 to process the task corresponding to the input data.

For example, the task processing module 2003 inputs input data to the child AI 201 selected by the selection module 2002. The input data is used as a prompt for the child AI 201. In addition to the input data, a default prompt prepared by the work support system 1 may be input to the child AI 201. The child AI 201 calculates an embedded representation based on the input data, and outputs output data corresponding to the embedded representation. The child AI 201 outputs output data corresponding to the embedded representation. The output of the output data corresponds to the processing of the task corresponding to the input data. The selection module 2002 acquires the output data output from the child AI 201. The series of processes of the child AI 201 is executed based on parameters adjusted through training.

For example, when the selection module 2002 selects the child AI 201A specialized in machine translation tasks, the child AI 201A outputs output data indicating the translation result corresponding to the embedded representation. When the selection module 2002 selects the child AI 201B specialized in summary creation tasks, the child AI 201B outputs output data indicating the summary corresponding to the embedded representation. When the selection module 2002 selects the child AI 201C specialized in research tasks, the child AI 201C outputs output data indicating the information corresponding to the embedded representation. When the selection module 2002 selects the child AI 201D specialized in scheduling tasks, the child AI 201D outputs output data indicating the adjustment result corresponding to the embedded representation.

In this embodiment, a case in which a transformer-based large language model corresponds to the child AI 201 is taken as an example, and hence the child AI 201 divides the character string represented by the input data into a plurality of tokens, and calculates an embedded representation of each token. The child AI 201 predicts, based on the sequence of embedded representations of the tokens, a continuation of the character string represented by the input data as required, and outputs output data.

The processing executed by the child AI 201 is not limited to the example described above. The child AI 201 may output any output data indicating a result of selection by a child AI 201 based on the input data. The relationship between those inputs and outputs may be defined in the program code of the child AI 201. For example, when the child AI 201 is a machine learning model other than a transformer, the child AI 201 may calculate an embedded representation based on the input data and output the output data corresponding to the embedded representation, in the same manner as described above. When the child AI 201 is a program that is not classified as a machine learning model, the output data may be output from the child AI 201 based on, for example, the program code and variables written in the program.

In this embodiment, the task processing module 2003 does not process the task corresponding to the input data when a child AI 201 is not selected by the selection module 2002. In this case, the task processing module 2003 transmits data indicating that the task corresponding to the input data has not been processed, to the user terminal 30. The user terminal 30 displays, based on this data, an error message indicating that the task corresponding to the input data has not been processed, on the display unit 35. When a child AI 201 is not selected by the selection module 2002, the task processing module 2003 may cause the task to be processed by a general-purpose parent AI 200, as in the modification examples described later. As another example, when a child AI 201 is not selected by the selection module 2002, the task processing module 2003 may cause the task to be processed by a general-purpose AI prepared separately from the parent AI 200.

### [Provision Module]

The provision module 2004 provides a processing result of the task processing module 2003 to the user. In this embodiment, the provision module 2004 is implemented by the server 20, and hence the provision module 2004 provides the processing result to the user by transmitting processing result data indicating the processing result of the task processing module 2003 to the user terminal 30. The user terminal 30 displays, based on the processing result data, information (for example, an image or text) indicating the processing result of the task processing module 2003, on the work support screen SC.

For example, the provision module 2004 includes an output provision module 2004A. The output provision module 2004A provides the user with the output acquired by the task processing module 2003, which is the output from the work support program selected by the selection module 2002. In this embodiment, a child AI 201 corresponds to the work support program, and hence the output provision module 2004A provides the output from the child AI 201 acquired by the task processing module 2003 to the user. That is, the output provision module 2004A provides the output acquired by the task processing module 2003 as it is to the user. The output data output from the child AI 201 is an example of processing result data. As in the modification examples described later, the processing result data may be generated based on the output data, instead of the output data directly becoming the processing result data.

The processing result data may have any format. In this embodiment, the processing result data may be any data that is required for displaying some information on the work support screen SC. For example, when the work support screen SC is displayed on the browser, the processing result data may be data in a markup language such as HTML. When the work support screen SC is displayed on an application dedicated to the work support system 1, the processing result data may be any data (for example, image data or text data) required for displaying some information on the application. In the example of FIG. 2, the provision module 2004 displays the answer indicated by the processing result data as a reply to the post made by the user. The post of the user is also displayed on the work support screen SC by processing of the server 20.

### [3-3. Functions Implemented in User Terminal]

For example, the user terminal 30 includes a data storage unit 3000, a display control module 3001, and an input receiving module 3002. The data storage unit 3000 is implemented by the storage unit 32. The display control module 3001 and the input receiving module 3002 are each implemented by the control unit 31.

### [Data Storage Unit]

The data storage unit 3000 stores data for the work support. For example, the data storage unit 3000 stores a browser for displaying various screens of the work support system 1. For example, the data storage unit 3000 stores a program dedicated to the work support system 1. The work support screen SC may be displayed on the program dedicated to the work support system 1.

### [Display Control Module]

The display control module 3001 displays various screens in the work support system 1 on the display unit 35. For example, the display control module 3001 displays, on the display unit 35, various screens such as the work support screen SC based on data received from the server 20.

### [Input Receiving Module]

The input receiving module 3002 receives an input by the user. For example, the input receiving module 3002 receives an input to various screens such as the work support screen SC. The input data indicating the input received by the input receiving module 3002 is transmitted to the server 20 as appropriate.

### [4. Processing Executed in Work Support System]

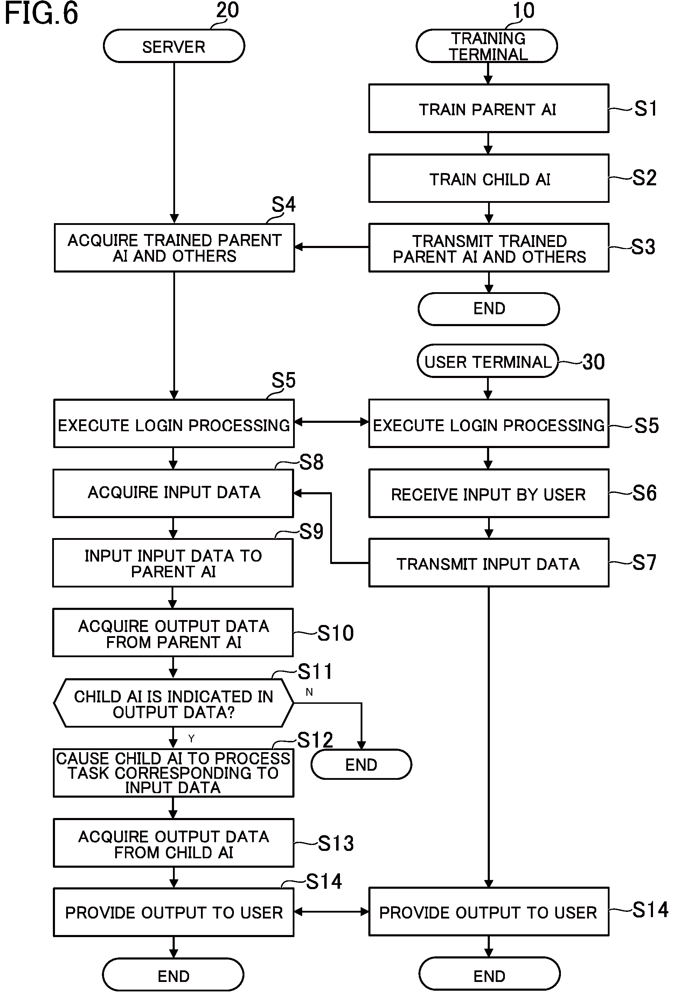

FIG. 6 is a flowchart for illustrating an example of processing executed in the work support system 1. Processing steps of FIG. 6 are executed by the control units 11, 21, and 31 executing the programs stored in the storage units 12, 22, and 32, respectively. The processing steps of FIG. 6 are an example of processing steps included in the work support method.

For example, the training terminal 10 trains the parent AI 200 based on the training data for the parent AI 200 stored in the training database DB (Step S1). The training terminal 10 trains each pre-trained child AI 201 based on the training data for that child AI 201 (Step S2). The training terminal 10 transmits the trained parent AI 200 and the trained plurality of child AIs 201 to the server 20 (Step S3). The server 20 acquires the parent AI 200 and the plurality of child AIs 201 from the training terminal 10 (Step S4). From this point onward, the user can use the parent AI 200 and the plurality of child AIs 201.

The user terminal 30 executes, between the user terminal 30 and the server 20, login processing for the user to log in to the work support system 1 (Step S5). The user terminal 30 receives the input by the user based on a detection signal of the operating unit 34 (Step S6). The user terminal 30 transmits the input data indicating the input received in Step S to the server 20 (Step S7). The server 20 acquires the input data from the user terminal 30 (Step S8). In the example of FIG. 2, the following processing is executed when an AI, for example, the parent AI 200 or a child AI 201, is mentioned.

The server 20 inputs the input data to the parent AI 200 (Step S9). The server 20 acquires output data indicating the output from the parent AI 200 (Step S10). The server 20 determines whether or not a child AI 201 selected by the parent AI 200 is indicated in the output data (Step S11). When it is determined in Step S11 that a child AI 201 is not indicated in the output data ("N" in Step S11), and the process ends. In this case, a message indicating that task processing by the child AI 201 has not been performed may be displayed on the user terminal 30.

When it is determined in Step S11 that a child AI 201 is indicated in the output data ("Y" in Step S11), the server 20 causes the child AI 201 to process the task corresponding to the input data (Step S12). The server 20 acquires output data indicating the output from the child AI 201 (Step S13). The server 20 executes, between the server 20 and the user terminal 30, processing for providing the output from the child AI 201 to the user (Step S14), and the process ends. In the example of FIG. 2, the answer from the child AI 201 is provided to the user as the output based on the processing step of Step S14.

### [5. Summary of Embodiment]

The work support system 1 according to this embodiment can select, based on the parent AI 200, the child AI 201 specialized in the task corresponding to the input data. When a child AI 201 is selected, the work support system 1 processes the task corresponding to the input data based on the selected child AI 201. As a result, the work support system 1 can effectively support the work of the user, thereby increasing the user convenience. For example, the user is not required to select the child AI 201 for processing the task from among a plurality of child AIs 201, and hence the work support system 1 can save the user time. When the user himself or herself selects a child AI 201, there is a possibility that the user selects a child AI 201 that is not suitable for processing the task corresponding to the input data. However, the work support system 1 can process, based on the parent AI 200, the task appropriately by selecting an appropriate child AI 201.

Further, the work support system 1 provides the user with the output from the child AI 201 selected by the selection module 2002. Through providing the output from the child AI 201 to the user as the processing result of the task corresponding to the input data, the work support system 1 can effectively support the work of the user. The user can check the content of the output from the child AI 201 as it is.

### [6. Modification Examples]

The present disclosure is not limited to the embodiment described above. The present disclosure can be modified as required without departing from the purport of the present disclosure.

### [6-1. Modification Example 1]

For example, in the embodiment, the case in which the output provision module 2004A provides the output from the child AI 201 specialized in the task corresponding to the input data to the user as it is has been taken as an example. In Modification Example 1, a case in which the parent AI 200 processes the output from the child AI 201 into an appropriate form is taken as an example. For example, the parent AI 200 modifies the output from the child AI 201 into more general wording. The parent AI 200 may merge the output from the child AI 201 with the processing result of the task processed by the parent AI 200. In Modification Example 1, the output after processing by the parent AI 200 is provided to the user.

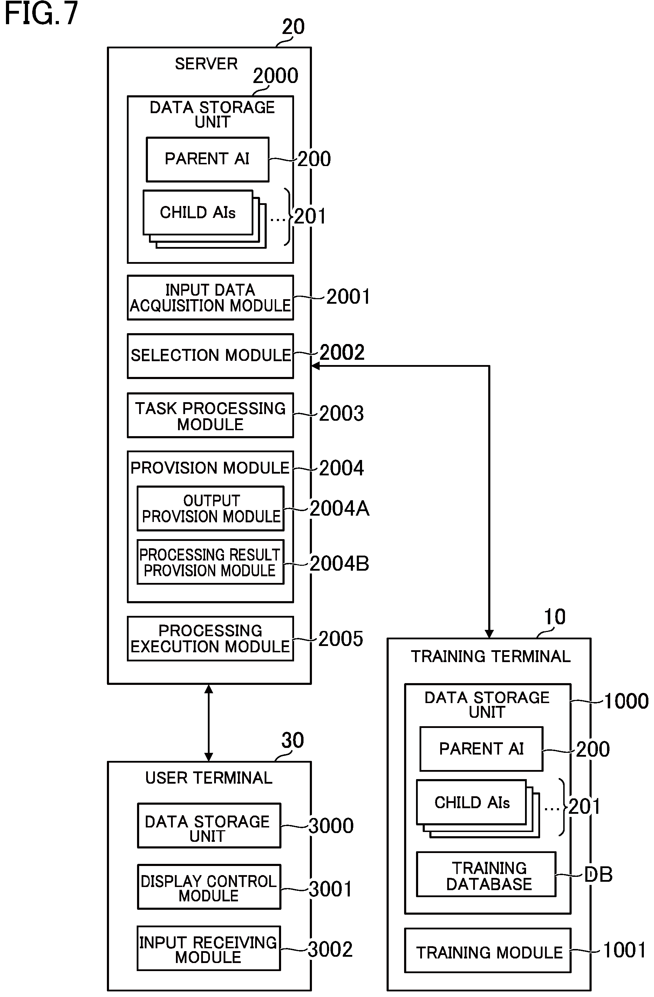

FIG. 7 is a diagram for illustrating an example of functions implemented in the work support system 1 according to Modification Example 1. The work support system 1 according to Modification Example 1 includes a processing execution module 2005. The processing execution module 2005 is implemented by the control unit 11. The provision module 2004 in Modification Example 1 includes a processing result provision module 2004B. The provision module 2004 in Modification Example 1 is not required to include the output provision module 2004A. The work support system 1 may include both the output provision module 2004A and the processing result provision module 2004B, and those modules may be used interchangeably depending on the situation.

The processing execution module 2005 executes, based on the parent AI 200, processing on the output that is output from the work support program selected by the selection module 2002 and that is acquired by the task processing module 2003. In Modification Example 2 as well, like in the embodiment, a case in which the child AI 201 corresponds to a work support program is taken as an example. For example, the processing execution module 2005 inputs the output data from the child AI 201 to the parent AI 200. The parent AI 200 may modify all or a part of the output indicated by the output data from the child AI 201, or may add all or a part of the content of the input indicated by the input data to the output indicated by the output data from the child AI 201.

The processing execution module 2005 may input to the parent AI 200 not only the output data from the child AI 201, but also at least one of the input data or prompt data indicating a prompt determined in advance. The processing execution module 2005 may execute, based on at least the output data from the child AI 201, processing on the output indicated by that output data. The prompt data may indicate processing content on the output from the child AI 201.

For example, when the parent AI 200 is to modify the output from the child AI 201 into more general wording, the prompt data indicates a prompt such as "Please modify this sentence into more general wording." When the parent AI 200 is to merge the output from the child AI 201 with the processing result of the parent AI 200, the prompt data indicates a prompt such as "Please merge this sentence with your processing result." The parent AI 200 may execute the processing of the processing content indicated by the prompt data on the output from the child AI.

The processing result provision module 2004B provides a processing result of the processing execution module 2005 to the user. The processing result provision module 2004B provides the processing result to the user by transmitting processing result data indicating the processing result of the processing execution module 2005 to the user terminal 30. The user terminal 30 displays, based on the processing result data, information (for example, an image or text) indicating the processing result of the processing execution module 2005 on the work support screen SC. The processing result provision module 2004B differs from the output provision module 2004A in that the processing result provision module 2004B does not provide the output from the child AI 201 to the user as it is, but the method of providing information itself is the same as that of the output provision module 2004A.

The work support system 1 according to Modification Example 1 executes, based on the parent AI 200, processing on the output that is output from the work support program selected by the selection module 2002 and that is acquired by the task processing module 2003. The work support system 1 provides the processing result from the parent AI 200 to the user. As a result, the work support system 1 can provide more appropriate information to the user, thereby effectively increasing the user convenience. For example, when the output from the child AI 201 is unnatural as a sentence, the work support system 1 can cause the parent AI 200 modify the unnatural sentence into an appropriate sentence, and then provide the modified sentence to the user, thereby increasing the user convenience. When the work support system 1 merges the output from the child AI 201 with the task processing result from the parent AI 200, and provides the merged information to the user, more information can be presented to the user.

### [6-2. Modification Example 2]

For example, the task processing module 2003 may process, when a work support program is not selected by the selection module 2002, the task corresponding to the input data based on the parent AI 200. In Modification Example 2, like in the embodiment, a case in which a child AI 201 corresponds to the work support program is taken as an example. Thus, when a child AI 201 is not selected by the selection module 2002, the task processing module 2003 processes the task corresponding to the input data based on the parent AI 200.

The parent AI 200 in Modification Example 2 is not an AI specialized in a specific task, but is a general-purpose AI that can process various tasks. For example, in the embodiment, the case in which the parent AI 200 is created by retraining a pre-trained large language model has been taken as an example. When the pre-trained large language model is a transformer-based model such as a GPT, the parent AI 200 created by pretraining also has versatility. The parent AI 200 may also be a multi-task AI that can handle a plurality of specific tasks.

For example, the task processing module 2003 inputs input data to the parent AI 200 selected by the selection module 2002. The parent AI 200 calculates an embedded representation based on the input data, and outputs output data corresponding to the embedded representation. The parent AI 200 outputs output data corresponding to the embedded representation. The output of the output data corresponds to the processing of the task corresponding to the input data. The selection module 2002 acquires the output data output from the parent AI 200. The series of processes of the parent AI 200 may be executed based on parameters adjusted through training. For example, when retraining is executed in order to make the parent AI 200 have versatility, the series of processes of the parent AI 200 is executed based on parameters adjusted through the retraining.

The work support system 1 according to Modification Example 2 processes, when a child AI 201 is not selected by the selection module 2002, the task corresponding to the input data based on the parent AI 200. As a result, the work support system 1 can prevent such a situation that no information can be provided to the user when a work support program is not selected by the selection module 2002, and the work support system 1 can provide some sort of information to the user. For example, when the user requests a task that cannot be handled by a child AI 201, the work support system 1 can process the task based on the general-purpose parent AI 200, and provide the processing result to the user.

### [6-3. Modification Example 3]

For example, in the embodiment, the case in which each of the plurality of work support programs is a child AI 201 has been described. However, the plurality of work support programs may include a child AI 201 which is a different AI from the parent AI 200, and a non-AI program which is not an AI. The non-AI program is a program that is not classified as AI. All or a part of the input data is input to the non-AI program. The non-AI program outputs output data based on the all or the part of the input data input to the non-AI program. The non-AI program is assumed to be stored in the data storage unit 2000, but the non-AI program may be stored in another computer. The non-AI program may be a simple program, such as a program which acquires the current date. Even such a simple program can handle the task of acquiring the current date.

For example, the non-AI program may be a machine translation program not classified as AI, a summary creation program not classified as AI, a research program not classified as AI (for example, a search engine program not classified as AI), a scheduling program not classified as AI, or another program. Those non-AI programs may be programs used in publicly-known groupware, or programs used in publicly-known work support services not classified as groupware. The non-AI program may be a rule-based program described above.

The task processing module 2003 in Modification Example 3 processes, when a child AI 201 is selected by the selection module 2002, the task corresponding to the input data based on the selected child AI 201. The processing of the task processing module 2003 in this case is as described in the embodiment. The task processing module 2003 processes, when a non-AI program is selected by the selection module 2002, the task corresponding to the input data based on the non-AI program. The task processing module 2003 inputs all or a part of the input data to the non-AI program. The processing of the non-AI program may be processing used in publicly-known groupware, or processing used in publicly-known work support services that are not classified as groupware.

For example, the non-AI program executes, based on the program code contained in the non-AI program, processing on all or the part of the input data input to the non-AI program. The non-AI program outputs output data indicating the execution result of the program code. The task processing module 2003 acquires the output data output from the non-AI program. When the non-AI program is stored on another computer other than the server 20, the task processing module 2003 may transmit the input data to the other computer, and request that the non-AI program process the task. The task processing module 2003 acquires, from the other computer, processing result data indicating the result of processing the task by the non-AI program.

The work support system 1 according to Modification Example 3 processes, when a child AI 201 is selected by the selection module 2002, the task corresponding to the input data based on the selected child AI 201. The work support system 1 processes, when a non-AI program is selected by the selection module 2002, the task corresponding to the input data based on the non-AI program. As a result, the work support system 1 can cause an appropriate one of the child AI 201 and the non-AI program to process the task corresponding to the input data.

### [6-4. Modification Example 4]

For example, in Modification Example 3, a child AI 201 and a non-AI program which are specialized in the same task may exist. For example, there may exist not only the child AI 201A specialized in machine translation, but also a non-AI program not classified as AI that can handle machine translation tasks. There may exist not only the child AI 201B specialized in summary creation, but also a non-AI program not classified as AI that can handle summary creation tasks. There may exist not only the child AI 201C specialized in research, but also a non-AI program not classified as AI that can handle research tasks. There may exist not only the child AI 201D specialized in scheduling, but also a non-AI program not classified as AI that can handle scheduling tasks.

The selection module 2002 in Modification Example 4 selects the child AI 201 and the non-AI program when both the child AI 201 and the non-AI program can process the task corresponding to the input data. When both the child AI 201 and the non-AI program are selected by the selection module 2002, the task processing module 2003 processes the task corresponding to the input data based on both the child AI 201 and the non-AI program, and may select any one of the output from the child AI 201 or the output from the non-AI program. The processing of the task by each of the child AI 201 and the non-AI program is as described in the embodiment or Modification Example 3.

The task processing module 2003 selects one of the output from the child AI 201 and the output from the non-AI program based on a predetermined selection method. The selection method can be any method determined in advance. In Modification Example 4, as an example of the selection method, a case in which the parent AI 200 is caused to select an appropriate output between the output from the child AI 201 and the output from the non-AI program is taken as an example. For example, the training data of the parent AI 200 indicates a relationship between two training outputs and the output that serves as a ground truth. The training module 1001 trains the parent AI 200 so that when the two training outputs indicated in the input portion of the training data are input to the parent AI 200, the parent AI 200 selects and outputs the output that serves as the ground truth indicated in the output portion of the training data. The training algorithm may be one of various publicly-known algorithms, as in the embodiment.

For example, the task processing module 2003 inputs each of the output from the child AI 201 and the output from the non-AI program to the parent AI 200. The parent AI 200 calculates an embedded representation of each of the output from the child AI 201 and the output from the non-AI program, and selects an appropriate output based on those embedded representations. The parent AI 200 may select both the output from the child AI 201 and the output from the non-AI program, or may select only one of the output from the child AI 201 and the output from the non-AI program, depending on the respective embedded representations. The parent AI 200 outputs output data indicating the selection result of at least one of the output from the child AI 201 or the output from the non-AI program.

For example, the task processing module 2003 acquires the output data output from the parent AI 200. The provision module 2004 provides a processing result to the user based on the selection result indicated by the output data. For example, the provision module 2004 provides the processing result to the user based on at least one of the output from the child AI 201 or the output from the non-AI program that has been selected by the parent AI 200.

The method of selecting the task processing module 2003 is not limited to the method of using the parent AI 200. The task processing module 2003 may select any one of the output from the child AI 201 or the output from the non-AI program based on another selection method. For example, when the child AI 201 can calculate a score indicating the accuracy of the output, and the non-AI program can also calculate a score indicating the accuracy of the output, the task processing module 2003 may select one of the output from the child AI 201 and the output from the non-AI program that has the higher score. As another example, the task processing module 2003 may select one of the output from the child AI 201 and the output from the non-AI program that has the longer sentence.

The work support system 1 according to Modification Example 4 processes, when both the child AI 201 and the non-AI program are selected by the selection module 2002, the task corresponding to the input data based on both the child AI 201 and the non-AI program, and selects any one of the output from the child AI 201 or the output from the non-AI program. As a result, the work support system 1 can provide a more appropriate processing result to the user.

### [6-5. Modification Example 5]

For example, the plurality of work support programs may include a public program that processes public data which is disclosable, and a private program that processes private data which is non-disclosable. In Modification Example 5, like in the embodiment, a case in which a child AI 201 corresponds to the work support program is taken as an example. A child AI 201 that processes public data is an example of a public program. A child AI 201 that processes private data is an example of a private program. The child AI 201 that processes public data may exist on another computer other than the server 20. The child AI 201 that processes private data completes information processing in a secure environment within the server 20.

Public data is data that may be disclosed outside of the work support system 1. For example, data that may be retained as a log outside of the work support system 1 corresponds to public data. Public data is a part of the data registered in the work support system 1. For example, data other than confidential data of the organization to which the user belongs corresponds to public data. Data representing information published on a general website such as an internet encyclopedia or a website corresponds to public data. Classification data indicating which data is classified as public data is stored in advance in the data storage unit 2000.

Private data is data that is not to be disclosed outside of the work support system 1. For example, data that is not to be retained as a log outside of the work support system 1 corresponds to private data. Private data is, of the data registered in the work support system 1, the data other than public data. For example, of the schedule data registered in the schedule management function, data such as the names of people outside the organization to which the user belongs corresponds to private data. Similarly, for example, confidential data of the organization to which the user belongs corresponds to private data. Classification data indicating which data is classified as private data is stored in advance in the data storage unit 2000. The child AI 201 in Modification Example 5 processes tasks by referring to at least one of public data or private data.

In Modification Example 5, the output portion of the training data learned by the parent AI 200 is child AI identification data indicating any one of the child AI 201 that processes public data or the child AI 201 that processes private data. For example, when the processing of the task corresponding to a certain piece of training input data only requires the disclosure of public data and does not require the disclosure of private data, then the child AI identification data that is paired with that piece of training input data indicates the child AI 201 that processes public data. For example, when the processing of the task corresponding to a certain piece of training input data not only requires the disclosure of public data but also the disclosure of private data, then the child AI identification data paired with that piece of training input data indicates the child AI 201 that processes private data.

The parent AI 200 in Modification Example 5 is trained on higher-level training data, and hence the parent AI 200 can estimate, based on the type of input data, whether to select the child AI 201 that processes public data or the child AI 201 that processes private data. For example, the selection module 2002 inputs input data to the parent AI 200. The parent AI 200 calculates an embedded representation of the input data, and outputs output data indicating the child AI 201 that processes public data or the child AI 201 that processes private data based on the embedded representation. As described in the embodiment, the parent AI 200 may not select any child AI 201.

The task processing module 2003 in Modification Example 5 processes, when the public program is selected by the selection module 2002, the task corresponding to the input data based on the public program and the public data. In Modification Example 5, a case in which the child AI 201 that processes public data corresponds to the public program is taken as an example, and hence the task processing module 2003 inputs the input data to the child AI 201 that processes public data. The child AI 201 calculates the embedded representation of the input data, and acquires the public data based on the embedded representation. The parent AI 200 may acquire the public data, instead of the child AI 201 acquiring the public data, and the selection module 2002 may input the public data acquired by the parent AI 200 to the child AI 201. The child AI 201 retains the public data as a log outside the work support system 1, and then processes the task corresponding to the input data. Modification Example 5 is different from the embodiment and the other modification examples in that the public data is retained as a log outside the work support system 1, but the flow in which the child AI 201 processes the task is the same as in the embodiment and the other modification examples.

The task processing module 2003 in Modification Example 5 processes, when the private program is selected by the selection module 2002, the task corresponding to the input data based on the private program and the private data. In Modification Example 5, a case in which the child AI 201 that processes private data corresponds to the private program is taken as an example, and hence the task processing module 2003 inputs the input data to the child AI 201 that processes private data. The child AI 201 calculates the embedded representation of the input data, and acquires the private data based on the embedded representation. The parent AI 200 may acquire the private data, instead of the child AI 201 acquiring the private data, and the selection module 2002 may input the private data acquired by the parent AI 200 to the child AI 201. The child AI 201 does not retain the private data as a log outside the work support system 1, and then processes the task corresponding to the input data. Modification Example 5 is different from the embodiment and the other modification examples in that the private data is not retained as a log outside the work support system 1, but the flow in which the child AI 201 processes the task is the same as in the embodiment and the other modification examples.

The work support system 1 according to Modification Example 5 processes, when a public program is selected by the selection module 2002, the task corresponding to the input data based on the public program and the public data. The work support system 1 processes, when a private program is selected by the selection module 2002, the task corresponding to the input data based on the private program and the private data. As a result, the work support system 1 can reliably prevent confidential data from being leaked to the outside. For example, the work support system 1 can switch between the child AI 201 that processes private data and the child AI 201 that processes public data as child AIs 201 that can process the same task.

### [6-6. Modification Example 6]

For example, when there are many child AIs 201 specialized in specific tasks, a single parent AI 200 may not be able to select an appropriate child AI 201. For this reason, three or more hierarchical layers may exist in the AI, such as parent, child, and grandchild. In Modification Example 6, a case in which there are three hierarchical layers is taken as an example, but there may be four or more hierarchical layers. The AIs at the lowest hierarchical layer are AIs specialized in a specific task. The AIs other than those at the lowest hierarchical layer are AIs that can select an AI at the hierarchical layer one level below that AI. The AIs other than those at the lowest hierarchical layer may be general-purpose AIs described in Modification Example 2.

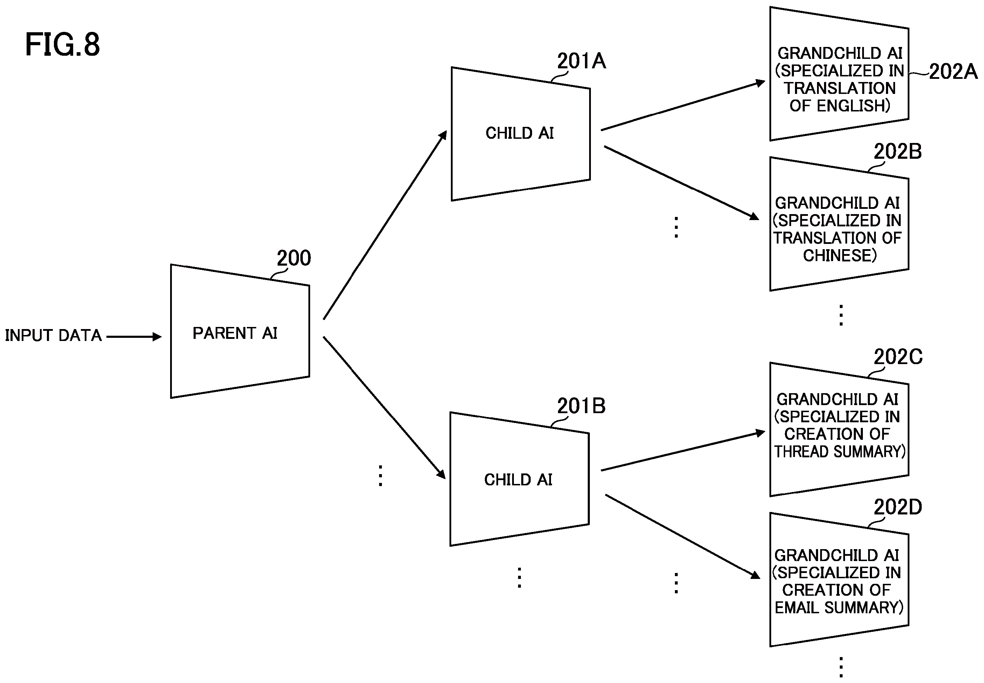

FIG. 8 is a diagram for illustrating an example of AIs in Modification Example 6. In FIG. 8, a parent AI 200, a plurality of child AIs 201, and a plurality of grandchild AIs 202 exist. The parent AI 200 can select at least one child AI 201 based on the input data. Modification Example 6 is the same as the embodiment in the point that the training data for the parent AI 200 indicates the relationship between the training input data and the child AI identification data of the child AI 201 that serves as a ground truth. However, Modification Example 6 is different from the embodiment in the point that the child AIs 201 in Modification Example 6 are not AIs specialized in a specific task, but are AIs that can select a grandchild AI 202. The parent AI 200 in Modification Example 6 has been trained on such training data, and hence can select an appropriate child AI 201 corresponding to the input data.

The child AIs 201 in Modification Example 6 can select at least one grandchild AI 202 based on the input data. In Modification Example 6, the child AIs 201 have the same functions as those of the parent AI 200 described in the embodiment and Modification Examples 1 to 5. The training data for the child AI 201 is the same as the training data for the parent AI 200 described in the embodiment. However, the output portion of the training data is grandchild AI identification data for identifying a grandchild AI 202. The grandchild AI identification data is different from the child AI identification data in that the grandchild AI identification data is used to identify a grandchild AI 202, but in other respects, the grandchild AI identification data is the same as the child AI identification data. The child AIs 201 in Modification Example 6 have been trained on such training data, and hence an appropriate child AI 201 corresponding to the input data can be selected.

For example, the grandchild AIs 202 have the same functions as those of the child AIs 201 described in the embodiment and Modification Examples 1 to 5. The description of the child AIs 201 in the embodiment and Modification Examples 1 to 5 can be read as referring to the grandchild AIs 202. In the example of FIG. 8, a plurality of grandchild AIs 202 specialized in the same task exist. For example, as grandchild AIs 202 specialized in machine translation tasks, a grandchild AI 202A specialized in English translation and a grandchild AI 202B specialized in Chinese translation exist. The grandchild AI 202A has been trained on English training data. The grandchild AI 202B has been trained on Chinese training data. The child AI 201A can estimate which of the grandchild AI 202A or the grandchild AI 202B is appropriate based on the input data, and select the appropriate grandchild AI 202. The parent AI 200 estimates that processing by the child AI 201A is appropriate based on the input data, and selects the child AI 201A. The child AI 201A has been trained on training input data for translation as training data.

For example, as grandchild AIs 202 specialized in summary creation tasks, a grandchild AI 202C specialized in creation of thread summary and a grandchild AI 202D specialized in creation of email summary exist. The grandchild AI 202C has been trained on training data indicating thread posts. The grandchild AI 202D has been trained on training data indicating the content of emails. The child AI 201B can estimate which of the grandchild AI 202C or the grandchild 202D is appropriate based on the input data, and select the appropriate grandchild AI 202. The parent AI 200 estimates that processing by the child AI 201B is appropriate based on the input data, and selects the child AI 201B. The child AI 201B has been trained on training input data for summary creation as training data. For other tasks as well, the grandchild AI 202 that is to perform the final task is selected in the same manner by the child AI 201.

The selection module 2002 in Modification Example 6 selects a child AI 201 that can select a work support program. The selection module 2002 selects a work support program based on the selected child AI 201. In the example of FIG. 8, the selection module 2002 may correspond to the parent AI 200. When the selection module 2002 does not correspond to the parent AI 200, the selection module 2002 may select a child AI 201 based on the parent AI 200. For example, the selection module 2002 selects a work support program based on a child AI 201 selected by the parent AI 200, which is another AI that can select any child AI 201 from among a plurality of child AIs 201. In Modification Example 6 as well, a case in which a grandchild AI 202, which corresponds to the child AIs 201 described in the embodiment, corresponds to the work support program is described. At least one of the parent AI 200 or the child AIs 201 in Modification Example 6 may be a general-purpose AI. In addition, the selection of the child AI 201 may be performed by a program that is not classified as an AI, instead of an AI like the parent AI 200.

For example, the selection module 2002 inputs input data to the parent AI 200. The parent AI 200 calculates an embedded representation based on the input data, and outputs output data corresponding to the embedded representation. When a child AI 201 corresponding to the embedded representation exists, the parent AI 200 outputs the child AI identification data of that child AI 201 as output data. When a child AI 201 corresponding to the embedded representation does not exist, the parent AI 200 outputs output data indicating that a child AI 201 is not selected. The selection module 2002 acquires the output data output from the parent AI 200. The series of processes of the parent AI 200 is executed based on parameters adjusted through training.

For example, the selection module 2002 inputs input data to the child AI 201 indicated by the output data. The parent AI 200 calculates an embedded representation based on the input data, and outputs output data corresponding to the embedded representation. When a grandchild AI 202 corresponding to the embedded representation exists, the parent AI 200 outputs the child AI identification data of that grandchild AI 202 as output data. When a grandchild AI 202 corresponding to the embedded representation does not exist, the parent AI 200 outputs output data indicating that a grandchild AI 202 is not selected. The selection module 2002 acquires the output data output from the parent AI 200. The series of processes of the child AI 201 is executed based on parameters adjusted through training.

The processing of the task processing module 2003 after the grandchild AI 202 is selected may be the same as in the embodiment. The task processing module 2003 may cause the grandchild AI 202 to process a task like those described in the embodiment that are processed by the child AIs 201. The task processing module 2003 inputs input data to the grandchild AI 202 selected by the selection module 2002. The task processing module 2003 acquires output data from the grandchild AI 202.

The work support system 1 according to Modification Example 6 selects a child AI 201 that can select a grandchild AI 202. As a result, the work support system 1 can appropriately process the task corresponding to the input data even when the number of work support programs, such as the grandchild AIs 202, increases.

### [6-7. Modification Example 7]

For example, when a plurality of work support programs are selected by the selection module 2002, the task processing module 2003 may process the task corresponding to the input data based on the plurality of work support programs, and merge the respective outputs from the plurality of work support programs. In Modification Example 7 as well, like in the embodiment, a case in which a child AI 201 corresponds to the work support program is taken as an example. When Modification Example 6 and Modification Example 7 are combined, a grandchild AI 202 corresponds to the work support program. "Merge the outputs" may mean that the task processing module 2003 simply combines the plurality of outputs, or may mean that the task processing module 2003 generates a new output based on the plurality of outputs.

For example, when a plurality of child AIs 201 are selected by the selection module 2002, the task processing module 2003 causes each of the plurality of child AIs 201 to process the task corresponding to the input data. The processing of the task by each child AI 201 is as described in the embodiment. The task processing module 2003 combines the respective outputs from the plurality of child AIs 201 to generate a single output. For example, the task processing module 2003 may merge the respective outputs from the plurality of child AIs 201 by performing an AND operation of the outputs, or may merge the respective outputs from the plurality of child AIs 201 by performing an OR operation of the outputs. The provision module 2004 provides the processing result to the user based on the single piece of output data generated by the task processing module 2003.

For example, when the task corresponding to the input data is scheduling, and the schedule of the user is managed separately by a plurality of schedule management functions, the task processing module 2003 merges the output from a child AI 201 that performs scheduling based on a schedule managed by one schedule management function with the output from a child AI 201 that performs scheduling based on a schedule managed by another schedule management function. The task processing module 2003 can acquire an output that indicates a time when the user is reliably free by merging those outputs based on an AND operation of the times when those outputs indicate that the user is free. For other tasks as well, the outputs from the child AIs 201 may be merged in the same manner.

The work support system 1 according to Modification Example 7 processes, when a plurality of child AIs 201 are selected by the selection module 2002, the task corresponding to the input data based on the plurality of child AIs 201, and merges the respective outputs from the plurality of child AIs 201. As a result, the work support system 1 can provide useful information to the user by merging processing results from more child AIs 201. For example, even when the schedule of the user is managed separately by a plurality of schedule management functions, the work support system 1 can present to the user a time when he or she is reliably free by causing each of the plurality of child AIs 201 to check the availability of the user, which is managed by those schedule management functions, and merging the outputs.

### [6-8. Modification Example 8]

For example, when a plurality of work support programs are selected by the selection module 2002, the task processing module 2003 processes the task corresponding to the input data by inputting the outputs from some of the plurality of work support programs to another work support program among the plurality of work support programs. In Modification Example 8 as well, like in the embodiment, a case in which a child AI 201 corresponds to the work support program is taken as an example. When Modification Example 6 and Modification Example 8 are combined, a grandchild AI 202 corresponds to the work support program.

For example, the task processing module 2003 may input the output data from the child AI 201A, which is specialized in machine translation tasks, to the child AI 201B, which is specialized in summary creation tasks. In this case, the child AI 201B creates a summary in another language other than the input language indicated by the input data. The task processing module 2003 acquires the output data output by the child AI 201B. As another example, the task processing module 2003 may input the output data from the child AI 201B, which is specialized in summary creation tasks, to the child AI 201C, which is specialized in research tasks. In this case, the child AI 201C executes research corresponding to the summary of the input indicated by the input data. The task processing module 2003 acquires the output data output by the child AI 201C.

Further, which child AI 201 output is to be input to which child AI 201 by the task processing module 2003 may be determined in advance, or may be determined by the parent AI 200. When the determination is performed by the parent AI 200, training data regarding which child AI 201 output is to be input to which child AI 201 is included in the training data of the parent AI 200. Through training the parent AI 200 on such training data, the parent AI 200 can estimate which child AI 201 output is to be input to which child AI 201. The task processing module 2003 may acquire the final output by performing input and output in accordance with the flow estimated by the parent AI 200.

The work support system 1 according to Modification Example 8 processes, when a plurality of child AIs 201 are selected by the selection module 2002, the task corresponding to the input data by inputting the outputs from some of the plurality of child AIs 201 to another child AI 201 among the plurality of child AIs 201. As a result, the work support system 1 can cause a plurality of child AIs 201 to work together, and hence can increase the processing accuracy of the task.

### [6-9. Other Modification Examples]

For example, two or more of Modification Examples 1 to 8 may be combined. For example, the case in which AI-based work support is performed when the user uses a communication function such as conversation threading has been taken as an example, but the work support system 1 may perform the AI-based work support when the user uses another work support function. In this case as well, the work support system 1 may perform work support by executing the same processing as in the embodiment and Modification Examples 1 to 8.

For example, the functions described as being implemented by the server 20 may be implemented by the user terminal 30. In this case, it suffices that the functions are implemented by a browser script or an application installed on the user terminal 30. For example, the respective functions may be distributed to a plurality of computers, or may be implemented by a single computer.

## Claims

1. A work support system, comprising:
an input data acquisition module configured to acquire input data indicating an input by a user;
a selection module configured to select, from among a plurality of work support programs each specialized in a specific task in work support, a work support program based on an artificial intelligence (AI) configured to select the work support program specialized in the specific task corresponding to the input data; and
a task processing module configured to process, when the work support program is selected by the selection module, the specific task corresponding to the input data based on the work support program.

2. The work support system according to claim 1, further comprising an output provision module configured to provide the user with an output that is output from the work support program selected by the selection module and that is acquired by the task processing module.

3. The work support system according to claim 1 or 2, further comprising:
a processing execution module configured to execute, based on the AI, processing on the output that is output from the work support program selected by the selection module and that is acquired by the task processing module; and
a processing result provision module configured to provide a processing result of the processing execution module to the user.

4. The work support system according to claim 1 or 2, wherein the task processing module is configured to process, when a work support program is not selected by the selection module, the specific task corresponding to the input data based on the AI.

5. The work support system according to claim 1 or 2,
wherein the plurality of work support programs include an AI different from the AI and a non-AI program which is not an AI,
wherein the task processing module is configured to:
process, when the different AI is selected by the selection module, the specific task corresponding to the input data based on the different AI; and
process, when the non-AI program is selected by the selection module, the specific task corresponding to the input data based on the non-AI program.

6. The work support system according to claim 5, wherein the task processing module is configured to process, when both the different AI and the non-AI program are selected by the selection module, the specific task corresponding to the input data based on both the different AI and the non-AI program, and to select any one of an output from the different AI or an output from the non-AI program.

7. The work support system according to claim 1 or 2,
wherein the plurality of work support programs include a public program configured to process public data which is disclosable, and a private program configured to process private data which is non-disclosable, and
wherein the task processing module is configured to:
process, when the public program is selected by the selection module, the specific task corresponding to the input data based on the public program and the public data; and
process, when the private program is selected by the selection module, the specific task corresponding to the input data based on the private program and the private data.

8. The work support system according to claim 1 or 2, wherein the selection module is configured to select the AI configured to select the work support program.

9. The work support system according to claim 1 or 2, wherein the task processing module is configured to process, when a plurality of the work support programs are selected by the selection module, the specific task corresponding to the input data based on the plurality of the work support programs, and to merge respective outputs from the plurality of the work support programs.

10. The work support system according to claim 1 or 2, wherein the task processing module is configured to process, when a plurality of the work support programs are selected by the selection module, the specific task corresponding to the input data by inputting outputs from some of the plurality of the work support programs to another work support program among the plurality of the work support programs.

11. A work support method, comprising:
acquiring input data indicating an input by a user;
selecting, from among a plurality of work support programs each specialized in a specific task in work support, a work support program based on an artificial intelligence (AI) configured to select the work support program specialized in the specific task corresponding to the input data; and
processing, when the work support program is selected, the specific task corresponding to the input data based on the work support program.

12. A program for causing a computer to function as:
an input data acquisition module configured to acquire input data indicating an input by a user;
a selection module configured to select, from among a plurality of work support programs each specialized in a specific task in work support, a work support program based on an artificial intelligence (AI) configured to select the work support program specialized in the specific task corresponding to the input data; and
a task processing module configured to process, when the work support program is selected by the selection module, the specific task corresponding to the input data based on the work support program.
